# EUROPEAN PATENT APPLICATION

(11) **EP 3 121 666 A1**
(43) Date of publication of application: **25.01.2017**
(21) Application number: 15178117.6
(22) Date of filing: 23.07.2015
(51) Int. Cl.: G05B 17/02

(54) **MODULAR TEST PLATFORM**

(71) Applicant: Bombardier Transportation GmbH, 10785 Berlin (DE)
(72) Inventor: GIERING, Torsten, 14163 Berlin (DE)
(74) Representative: Patentanwälte Bressel und Partner mbB

(57) **Abstract**

The invention relates to a test platform 100 for testing an integrated test object 200, especially for testing railway trains, and a method for testing an integrated test object. The test platform (100) for testing an integrated test object (200) comprises: a global data pool (300) storing a representation of all present signals and states of the integrated test object (200); at least one instrumentation unit (400), said instrumentation unit (400) comprising: a global data pool interface (450) for at least providing representations of the signals and states of the at least one component tested at that respective test location for the global data pool (300), at least one hardware interface (410) for establishing signal communication with the at least one component of the integrated test objects (200) at the at least one instrumentation unit (400) for detecting and/or simulating the signals of the at least one component tested at that respective instrumentation unit, and a real time engine controlling said global data pool interface (450) and said at least one hardware interface (410); at least two test platform service units (500-900) for providing control services and/or monitoring services and/or evaluation services, wherein the provided services are each based on data of the global data pool (300), wherein each of the at least two service units (500-900) is equipped with its own global data pool interface (550-950) to enable at least read access to data from the global data pool (300) independently and simultaneously.

## Description

The invention relates to a test platform for testing an integrated test object, especially to a test platform for testing components of a railway train or an airplane. Those platforms are especially useful for the testing of electrical, electromechanical and/or electro-pneumatic train or airplane systems and components.

### Background of the invention

The complexity of modern railway trains has increased drastically over the past decades. Nowadays many systems and components are controlled and interconnected by a communication system comprising wiring, buses etc. In trains comprising multiple cars it is important to test the individual train systems and components with respect to their functionality not only as individual systems but also as components of an interconnected integrated train system. This also applies to other integrated test objects comprising several components which in itself can be made up of other sub-components etc.

In the state of the art some test platforms are known which are mainly intended to test single components. Other test platforms described in the prior-art comprise for example a first and a second test system for simulating a first and second test environment and a superior test system connected via a network to the first and second test system wherein the superior test system comprises a workstation for controlling the testing at the first and second test system. Such a system is disclosed in WO 2009/000822 A1.

Another prior-art system for testing the integration of different instances is disclosed in DE 10 2004 041 428 A1 in which several mechanical and/or electromechanical components which are either realized by mathematical model or a real hardware are tested in such a fashion that each module has its own energy supply and wherein the integration testing is carried out by connecting the different modules by a network, which could be an intranet of a company.

Also US 2009/271168 A1 describes a system for simulating an engineering project wherein a plurality of network computers are managed to at least in part execute their simulation in a synchronizing fashion and which update at least portions of the shared simulation data stored in their respective memories which are shared.

US 6,269,319 B1 discloses an integration test station for evaluating a design of the vehicle components, especially of airplanes wherein a central processing unit obtains from memory one of a plurality of models corresponding to a plurality of different vehicles for performing the testing.

None of the described test platforms and systems is able for testing the integration of different systems up to complete railway trains with all its components realized in actual hardware and/or software simulation to reveal critical interdependencies especially in safety relevant areas.

WO 2013/156062 A1 discloses a train test platform for integration testing of actual train components of multiple railway trains and a method to test such actual train components ahead of production of the first actual real train or without the need of an actual complete train. The test platform comprises a supervisor unit and several car units linked by a reflective memory system. The actual components to be tested are installed in instrumentation units of the respective car units. Instrumentation units provide brake out interfaces for connecting the actual train components to a train communication system comprising the wiring, bus systems, power supplies etc. that are functionally identical to the communication system in the actual train. Further, the instrumentation units simulate those components not being present physically in the respective car to provide the signals produced by these components and to react on signals designated for these components. Testing is performed by monitoring or manipulating signals at the breakout interfaces in real time. A testing is controlled by the supervisor unit using the reflective memory system to exchange information with the platform components in respective car units. Such a test platform is capable of precise and complete testing of integrated test objects like complete railway trains but is very inflexible an error prune due to the dependence on one supervisor unit.

The object of the invention is, thus, to increase the flexibility and reliability of the test platform known from the prior-art to enable faster and more flexible and more complete testing and internal analysis of an integrated test object realized partly or completely in real actual hardware.

### Summary of the invention

The basic idea of the invention is to structure the whole test platform equipment in different modules or units. Each of the units is connected to a global data pool which comprises information of all signals present and representing the state of each component of the integrated test object. To achieve a more reliable and a more flexible test platform each functional component used for performing automated or manual tests, for monitoring the test object, for visualization of the test object, for documenting the tests etc. is separately and independently connected to the global data pool. This way these service units providing these different functionalities can more or less operate independently in case of failure or malfunction of one of the other service units providing such functionality. All units of the test platform which are associated to testing a certain component that is at least partially embodied in hardware are referred to as an instrumentation unit. These are positioned at different testing locations. All other units such as a centralized simulation unit simulating components of the test object completely via a software model executed in a real time engine or real time operating system as well as all other units that are dedicated to provide functionality of the test platform only are referred to as service units. All the different units, service units as well as instrumentation units are all connected to the global data pool via a global data pool interface independently of each other. These global data pool interfaces are all configured that it is possible for each of the units to independently retrieve data from the global data pool and to do this simultaneously with other global data pool interfaces and, thus, simultaneously with other units of the test platform. Independently in this respect means that each global data pool interface can designate specific data in the global data pool it wants to retrieve. Simultaneously in this respect means that two different global data pool interfaces can at the same time get access to the same data in the global data pool or to different data in the global data pool.

The advantage of this invention is the flexibility to perform different functions that were needed for testing simultaneously and independently.

### Definition

A test location is a physical location at which at least one component of an integrated test object, which is at least partially embodied in hardware, can be positioned and connected to the test platform. The test object can be a door controller of a train system comprising eight cars. Alternatively, the test object can be an entire train system comprising eight cars, as well.

A global data pool is a collection of all data describing all present signals and/or all data describing parameters configuring the test object and test platform and/or all data representing representing states of the test object and test platform. At least for serial bus systems, on which communication is carried out according to a standardized protocol, for example in a message based fashion, complete messages instead of, or additionally to physical state values of the bus, can be stored in the global data pool. Thus, for certain signals it is possible to store the signal in an abstract representation.

A test platform, sometimes called test bench, is an entity used for testing a test object.

An integrated test object is an object which comprises several components which interact with each other by exchanging signals. Signals can be any optical or electrical representations of information. A binary signal can for example be represented by a certain voltage level or by the presence of an optical carrier signal compared to a different voltage level or the absence of an optical carrier signal (light on versus light off just to name a simple example).

A real-time engine is a software program executed on appropriate hardware to enable real-time reaction to input signals. I.e. the processing time is determined by the real-time engine and is not dictated by the computer scheduler like in stack oriented systems. The processing of an incoming signal is started immediately or at a point in time determined by the real-time engine. Delays due to resource limitations are supposed to be orders of magnitude lower than the anticipated processing time. Output signals are provided on time. Real-time engines used for simulation purposes closely mimic the timing behavior of the component simulated with regard to outputting signal responses when responding to input signals.

The term monitoring is used here for getting information about a signal without disturbing the signal or changing it. Monitoring a digital two level signal reveals the state of the signal, for example whether a wire carrying the signal is in a high voltage state or a low voltage state. Monitoring an analogue signal results in a value, for example the exact voltage level of a wire with respect to a reference potential. Ground or earth are usually used as reference potential or reference voltage having the value 0 or 0 V. From monitoring a bus one receives, depending on the bus type, one or several data streams representing signal states or signal voltages. This stream or these streams can often be interpreted in view of a protocol, to receive meaning full data like commands, instructions, addresses, data etc. Thus the result of monitoring a bus depends on the amount of processing done to the raw monitored bus data.

The terms simulation or to simulate are used where a signal or signals are provided by a simulator not present in an actual train system. The signal or signals are created to provide representative information on the wire or buses that are simulated based on the system actual conditions, obtained from the monitored signals. Thus a real system or component is mimicked or emulated in terms of providing signals that would be associated with a functionality said real component would provide. The term simulation is used when the real component is missing.

The terms manipulation or to manipulate are used for situations, where at least one signal on a wire or bus is forced to a certain state or value. The term manipulation is used when a real component is present that supplies the signal manipulated. This signal is manipulated in case the signal is forced to a certain state or value regardless of the actual supplied value or state supplied by the real component. Usually the term manipulation is used only when a state of this signal forced is different from the intended state or value this real component provides. Manipulation can also be used to change a signal supplied by a simulated component.

### Preferred embodiments

According to a preferred embodiment a test platform for testing an integrated test object, e.g. for testing railway trains, is provided said test platform comprising:
a global data pool storing a representation of all present signals and states of the integrated test object; at least one instrumentation unit, said instrumentation unit comprising a data pool interface for at least providing representations of the signals and/or
states for the global data pool of at least one component connected to the instrumentation unit or simulated in that instrumentation unit, at least one hardware interface for establishing signal communication with the at least one component of the integrated test object and a real time engine controlling said data pool interface and said at least one hardware interface; at least two test platforms service units for providing control services and/or monitoring services and/or evaluation services, wherein the services are each based on data of the global data pool, wherein each of the at least two service units is equipped with its own global data pool interface to enable at least read access to data from the global data pool independently of each other and simultaneously. The advantage of this embodiment is the ability to flexibly enable service units to at least retrieved data from the global data pool to enable simultaneously and independently of each other evaluation, visualization and other tasks.

According to a preferred embodiment the at least two service units comprise central a testing unit for performing automated control and/or simulation of the use of the test object and the at least a central user interface unit for visualization and/or manual control of the states and/or signals of the integrated test object. During automated test and control of the test object by the central test unit different components or sub-components can be visualized and/or even manually manipulated depending on the respective automated test process.

The global data pool is adapted to store and exchange data in a speed that allows real time communication in the context of the test object to be tested. I.e. the communication speed, behavior etc. of the test object determines the requirements and specifications to be met to achieve real time communication via the global data pool. For testing train systems one needs high speed solutions. Therefor a according to one embodiment the global data pool is realized via a reflective memory system, in which each global data pool interface comprises one local memory table comprising all data of the global data pool. This way each of the different units, each being one module of the modular test platform, has all global data of the global data pool stored in its own memory table and on the other hand each change in one of the different units affecting one of the data of the global data pool is automatically and almost instantaneously, just limited by the speed of the reflective memory system, initiated in all other memory tables of the different units being part of the reflective memory system.

Additionally and/or alternatively to one of the two service units described above the at least two test platform service units for providing control services, and/or monitoring services and/or evaluations services comprise according to one embodiment a global data pool data base unit, said global data pool data base unit comprising a global data pool interface for reading data from the global data pool and a global data pool data base for storing the data contained in the global data pool together with timing data indicating signal changes and/or occurrences of events to enable historical evaluation of the test object and/or test run carried out.

Preferably each memory location in the reflective memory which stores the global data pool is assigned to one of the units for a write access. This will be the unit that is actually detecting the change of signal or state represented by the respective data unit or group of data. In most cases this can be easily identified. In cases, where the signal change occurs on a bus system, usually only one of the different instrumentation units will communicate the respective change on the communication bus. Additionally it is possible to store the output signal sent to the bus in a separate memorial location assigned to the instrumentation unit of the component initiating the transmittal of the signal on the bus. This way for example hardware failure on a real bus system connecting components a different test locations or connecting different instrumentation units can be more easily detected and pined down. Thus, in a preferred embodiment a global data pool is configured to grant read access to the data of a global data pool simultaneously, i.e. at the same time, to at least several data pool interfaces but to grant write access to each data unit or group of data of a global data pool to just one of the data pool interfaces at a time. This way inconsistency of data can be avoided. The assignment of write access rights can obviously be changed so that different components or units are able to change respective data. This is especially important for controlling and manipulating the test object or components of it. Preferably the simulation and/or manipulation is carried out by changing data in the global data pool representing the respective signals that would be used to initiate certain functionality in the real test object.

To achieve a communication between an automated test run performed in the central testing unit for example, it is necessary that all simulation engines simulating those components of the integrated test object which are not embodied in actual real hardware constantly monitor the respective data of the global data pool that represents a certain signal line for example. Upon a change in a certain memory location a software engine, thus, has to pass on the change in a certain memory location of the reflective memory to the respective model simulating a certain component or sub-component. At the same time the instrumentation units comprise so-called break out boxes that are able to monitor and manipulate respective signals at signal lines, inputs or even internal signal lines of the real hardware of the test object. Break out boxes are hardware adapters for monitoring and/or manipulation purposes. Break out boxes transparently monitor signal lines for example at connectors of real systems etc. Some break out boxes, i.e. some hardware adapters, can also be used for manipulation, i.e. for forcing the signal value at an input or on a signal line.

According to one embodiment said at least one instrumentation units comprises a real time modelling engine simulating at least one of the components partially or completely. Additionally it is possible to have a central service unit which is simulating certain components that are completely simulated and do not comprise any sub-components realized at least partially in hardware. Thus, according to one embodiment the at least two test platform service units for providing controlling service and/or monitoring services and/or evaluation services comprise a central simulation unit for simulating at least one component of the integrated test object, said central simulation unit comprising a global data pool interface and a real time modelling engine for executing simulation models.

According to another embodiment, the service units of the test platform comprise a remote access server unit for providing monitoring access to the global data pool, said remote access server unit comprising a global data pool interface and a server module engine and a remote access interface. This enables access to the test platform via a communication network.

According to a preferred embodiment the different service units as well as all or some of the instrumentation units are provided with a communication network interface to enable remote control and/or configuration of the respective units and/or in case of the instrumentation units of the components of the integrated test object that are tested in hard- and/or software at the respective instrumentation unit.

The same communication network interfaces can also be used to transfer additional data to the global data pool data base to store to together with the data of the global data pool, log data or the like that are produced at the different service units or instrumentation units for example by the different simulation engines and/or real time control and modelling engines.

The instrumentation units as well as the central simulation unit are configured such that real time engines executing simulation models as well as real time operating systems controlling communication processes responsible for the signal exchange with the real hardware of the test object all exchange the signals and/or parameter produced by the test object and/or directed to the test object via the global data pool. Thus all inter process data exchange of those signals and or parameters related to the test object is carried out via the global data pool.

In one embodiment even the intra-process access to the signals and parameters is carried out via the global data pool. This way complete testing and monitoring of the test object is possible and guaranteed, as all signals and parameters related to the test object regardless of whether the respective component is present in hardware or just simulated by a real time engine executing a simulation model all signals and parameter are all the time present in the global data pool, in case they exist.

Further, a method for testing an integrated test object comprising the steps of: providing a test platform described above, wherein at least some real hardware of a component of the integrated test object is installed in one test location or connected to one instrumentation unit such that at least one signal of the real hardware is provided by the respective data pool interface to the global data pool; controlling the integrate test object via a service unit and monitoring and/or evaluating the test object via a different service unit, wherein both service units at least extract data from the global data pool simultaneously and independently of each other via the respective data pool interfaces.

As described above permission to change a certain data unit or certain group of data is preferably assigned to one data pool interface only at a time. According to a preferred embodiment, thus, changes of said certain data unit or said certain group of data of the global data pool are carried out by one unit only at a time. Thus only one data pool interface possesses the current permission to change that respective certain data unit or said respective certain group of data. Thus, for example, a central automated test run performed by real time simulation engine in the central test unit can inhibit in the reflective memory system changes in situations where manipulations of one or several components are carried out by changing the content of certain memory units or groups of memory units in the reflective memory table. As soon as these manipulations have been performed the central simulation unit can return write access for the respective memory locations back to those global data pool interfaces or the respective instrumentation units or service units that usually have write access to the respective memory locations.

Thus, according to the preferred embodiment the controlling and testing of the test object is performed by central test unit performing automated interaction with the test object via changing data in the global data pool.

The data collected at automated and/or manual test runs can be used to find certain signal states indicating ahead of an actual failure that this failure is most likely to happen. Thus, data collected can be used to program safety-monitoring equipment of the test object itself to detect situations that might lead to critical conditions of the test object well ahead of the actual critical condition and to initiate counter measures to prevent those critical situations form occurring in the real objects eventually produced.

The acquired data can be used for many other purposes too, for example be used as feedback to engineering processes or even production machines in case electromechanical misbehavior is detected. The test platform can also be used to train personal for using the real test objects and/or training personal servicing the real (test) objects etc.

### Brief description of the drawings

- Figure 1: a schematic drawing describing the interaction between a test platform and a test object;
- Figure 2: a schematic drawing of a modular test platform;
- Figure 3: a schematic drawing of an instrumentation unit;
- Figure 4: a schematic drawing of an interface module board of an instrumentation unit;
- Figure 5: another schematic drawing of a different embodiment of an interface module board at an instrumentation unit;
- Figure 6: another schematic drawing of an interface module board at an instrumentation unit for an embodiment simulating all the components located at that instrumentation unit;
- Figure 7: a schematic drawing of a software engine embodied in an instrumentation unit;

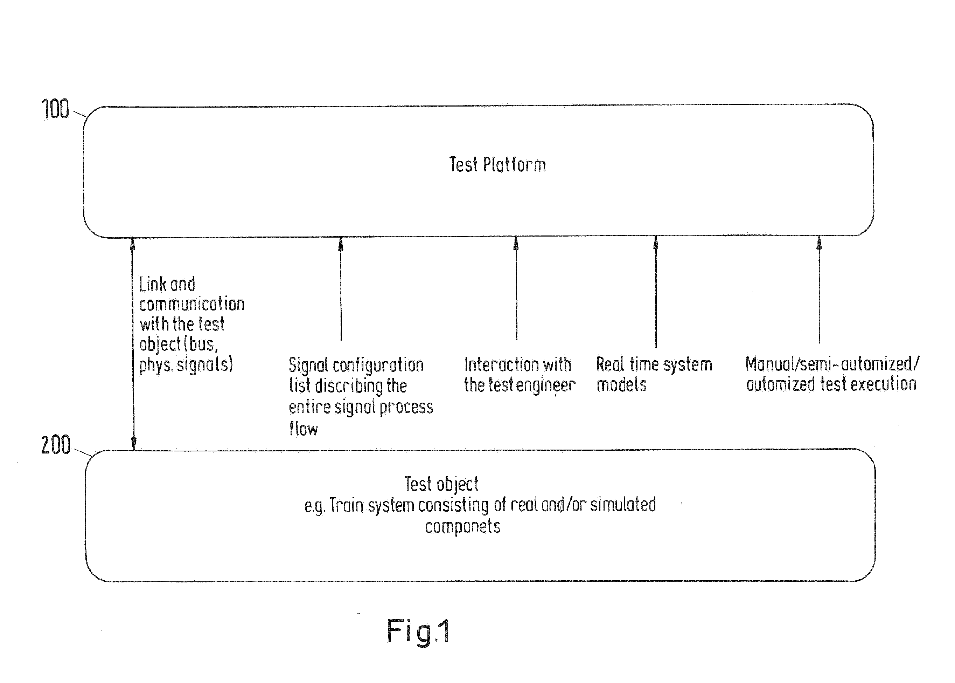

Figure 1 describes the basic interaction and functions performed by a test platform 100 to test an integrated test object 200. The test platform 100 is responsible for performing all functions needed in testing and evaluating the test object. In an ideal situation the test platform interacts with a test object by reading signals in a non-disturbing way that are created in the integrated test object and to read signals of dedicated sensors designed to detect certain states of the test object that cannot be deduce from internal signaling of the test object. Almost all necessary information on the test object can be acquired from electrical and/or optical signals created and exchanged somewhere in the test object. Thus dedicated extra sensors are hardly needed. The test object itself can consist of real and simulated components and of mixtures of real and simulated components. Signals exchanged on data buses can usually easily be monitored, i. e. read, as well as manipulated without much afford by adding another bus interface to the respective bus to retrieve the required signals for the test platform and possibly send signals for manipulation purposes.

In other instances so called break out boxes can be used that transparently monitor internal signals. These break out boxes have to be placed at internal electrical connectors for example on installation of real hardware components at the test platform.

Simulated components are designed in a fashion to provide the necessary signals at the test platform. Preferably part of the simulation of components is carried out in the test platform itself. In some preferred embodiments all simulation of components is carried out in the test platform itself. The test platform is provided with signal configuration lists describing the internal signal flow process to enable the configuration of the test platform itself and to interpret the required signals correctly. The test platform is also the interface to the test engineer performing tests with the integrated test object and enables the automated and / or manual control and the execution of test runs with the integrated test object. Finally information for manual or semi-automatized test runs which also accept some manual inputs are provided to the test platform to perform the testing capability. The test platform further acquires all necessary data to evaluate the different tests performed on the integrated test object and is responsible for visualization of the test result and for data keeping of the test results.

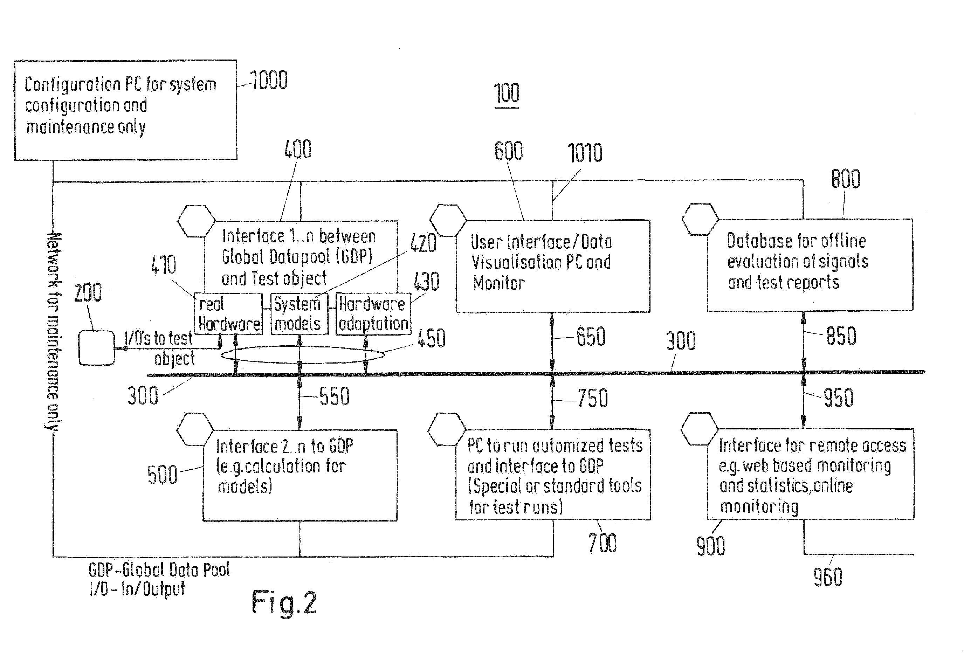

Figure 2 shows a schematic overview of an embodiment of the modular test platform 100. Identical technical features are assigned the same reference numerals in all figures and are not explained in detail in case they do not differ from features already described. At the center of the test platform is a global data pool 300 storing and exchanging all signals and parameters characterizing the signal flow as well as the state of the components of the integrated test object and test platform. All data exchange concerning these signals, state information and parameters of the integrated test object between different units of the test platform 100 are carried out directly between each unit and the global data pool 300.

In the depicted embodiment of the test platform 100 comprises one or more instrumentation units 400 which are dedicated to connecting real hardware components of the integrated test system with the test platform. Further these instrumentation units 400 can additionally or alternatively simulate components, parts of components, sub-components both partially and/or completely. The interaction with real hardware can be performed in some case via hardware interfaces 410 without any modification on the hardware side of the test object. As described above for example to monitor and manipulate signals exchanged on bus systems like a CAN-bus, to name just an example, one can use an additional CAN-bus interface. Simulated test components are provided by a system model 420 of the respective component or sub-component. To monitor or manipulate other signals it might be necessary to use hardware adapters 430 also called break out boxes that are dedicated to at least transparently monitor certain electrical and/or optical signals or states of the test object. In some instances these hardware adapters are also capable of manipulating the signal they are designed to monitor in the first place.

Further the test platform comprises a central simulation units 500 design to exclusively simulate the components of the test object and/or environment condition states, influencing the test object differently.

The test platform further comprises a special service unit designated for providing a user interface. This unit is called user interface unit 600. This user interface unit 600 for example provides hard- and software to visualize states and signals of the test object as well as a graphical interface for example to monitor and/or manipulate the test object and/or components manually. In a preferred embodiment this service unit, the user interface unit, for example comprises one or several touch screens with a graphical user interface to monitor and manipulate at least some of the components of the test object.

The test platform 100 further comprises another service unit dedicated to perform automated tests and manipulations of the test object. This service unit is called test unit or central test unit 700. This service unit basically comprises a real time simulation engine to execute different test models and/or scripts to perform automatized test runs on the test object.

To enable a detailed documentation of the data acquired in the test runs performed on the test object as well as to enable an offline evaluation of the test results the test platform 100 further comprises another service unit especially dedicated to store the data provided in the global data pool in a data base. This service unit is a global data pool data base unit 800 or short database unit. In a preferred embodiment changes of data in the data pool are also stored in the data base together with time information indicating the time of change of a certain signal and/or state.

The depicted embodiment of the test platform 100 further comprises a remote access unit 900 as a further service unit. This service unit is dedicated to providing remote access to the test platform to enable monitoring tests from remote locations via a communication network 960.

The basic concept of the described test platform is the provision of direct access to the global data pool of all different described units, instrumentation units, simulation units as well as the other service units. Thus each of these units comprises at least one global data pool interface 450, 550, 650, 750, 850, 950. In a preferred embodiment the global data pool is realized by a reflective memory system. In such an implementation the global data pool interfaces 450-950 are reflective memory cards each comprising a reflective memory table. Each reflective memory table comprises the same data at any time neglecting minute time differences to update all reflective memory tables upon a change of data in one of the reflective memory tables. Such a system enables each of the described unit 400-900 to to read out the same data unit or groups of data independently and also simultaneous with anyone of the other units. Thus the effect of the failure of one of the units 400-900 on the other units 400-900 will be minimized. This way it is possible upon failure for example of the central testing unit to shut down the test platform as well as the test object for example via the manual central manual user interface and to store the respective data that might have influenced the failure in the global pool data base unit 800.

All data exchange that is directly related to a test run and the test object are stored in the global data pool. Besides this information it is sometimes also necessary to control or configure the different units 400-900 described above. For this purpose an extra configuration computer 1000 is provided which is connected to the different units 400-900 via any different communication network 1010 for example a local area network. This configuration computer 1000 can also in some embodiments be equipped with a global data pool interface, i.e. a reflective memory card in cases where the global data pool is embodied in the form of a reflective memory system.

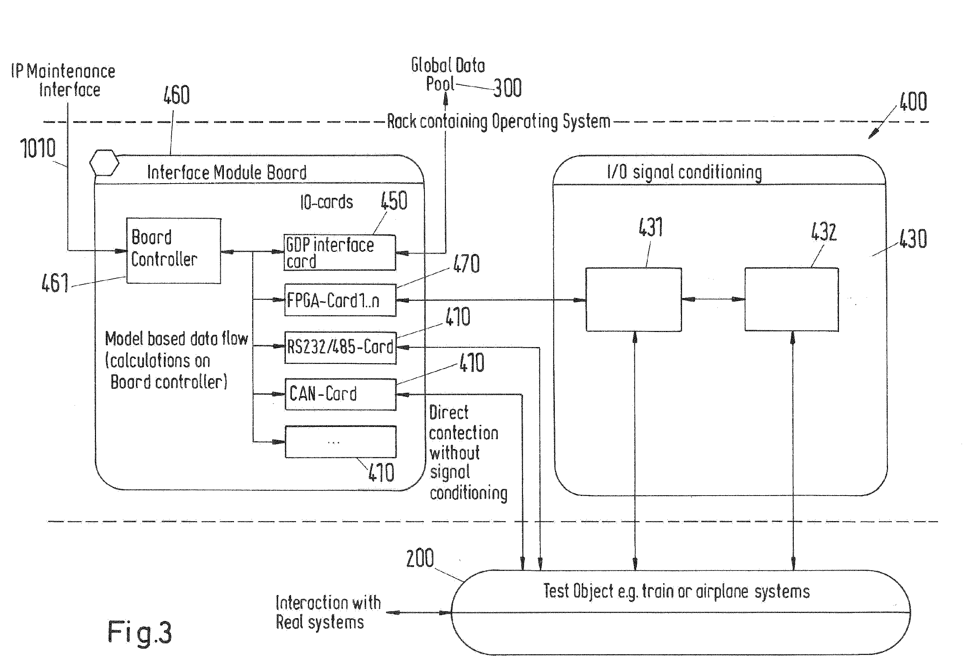

In fig. 3 an instrumentation unit 400 is depicted schematically. The instrumentation unit 400 comprises an interface model board 460 and input/output signal conditioning hardware which can be associated with the hardware adapters 430 described connection with the instrumentation unit 400 in fig. 2. The interface module board 460 can be regarded as a computer board comprising a board controller 461, a global data pool interface 450, and a number of hardware interfaces for example an RS 232/485 card, a CAN-card or other input/output interfaces that can be directly connected to the test object. To input and output signals monitored or manipulated via the hardware adapters 430 the interface model board 460 comprises one or more FPGA-cards 470 (FPGA - field programmable gate array).

The hardware adapters 431, 432 are also called break out boxes and are described in more detail for example in WO 2013/156062 A1. These hardware adapters can provide analog and digital signal conditioning of signals produced internally in the test object as well as the conditioning of signals in the high voltage range, which is performed for example by optocouplers, and/or the conditioning of optical signals etc. The only interaction of the test platform with the integrated test object or components of a test object is performed via these hardware adapters 430 and/or the standardized interfaces 410.

Simulated components of the test object are realized by software models executed on the board controller. Further the board controller is configured to update the reflective memory table of the global data pool whenever signal changes are monitored. Further the interface model board is configured to manipulate signals via the interfaces or hardware adapters in case respective data units are groups of data are forced to a different state in a simulation or test run to influence the control of the test component of the test object connected to the instrumentation unit.

It should be noted that the a certain component of an integrated test object in most cases will be interconnected with other components not necessarily connected to the same instrumentation unit responsible for testing that certain component. Thus there is interconnection between those components that belong to the test object. This is indicated by a double arrow 499.

To configure the instrumentation unit it is connected to a different communication network 1010. The global data pool interface 450 is coupled to the global data pool 300 which is completely stored in the reflective memory table of the global data pool interface 450 in case the global data pool is realized by reflective memory system.

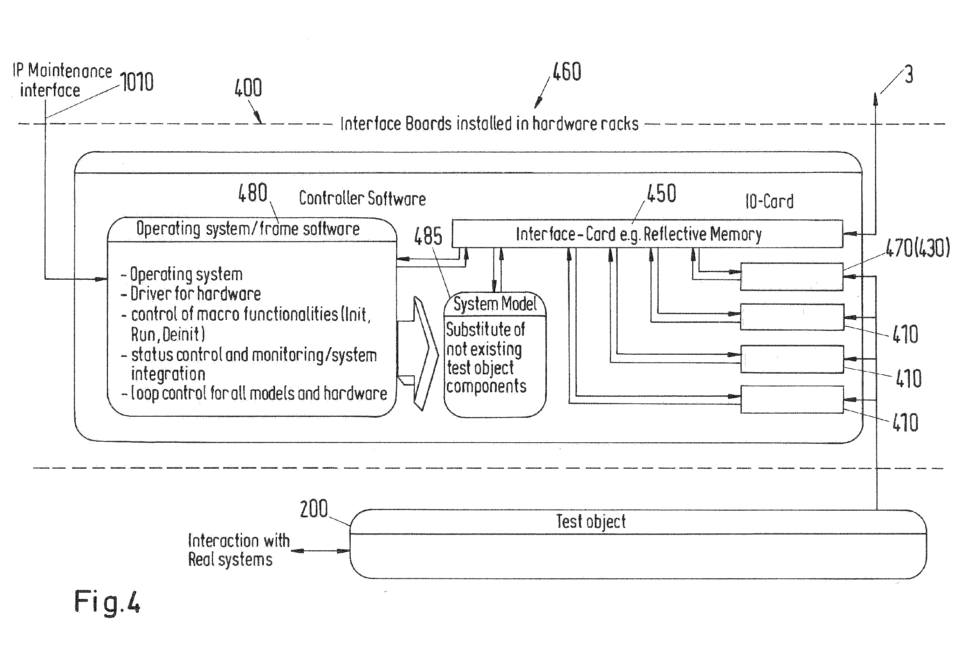

Figure 4 shows a different embodiment of an instrumentation unit 400 comprising an interface module board 460. Hardware adapters are missing or not shown. The reference numeral 430 in parentheses is reminding of their existence .This schematic drawing is supposed to focus on the fact that all information coming from the test object are relayed directly to the global data pool 300 embodied in the global data pool interface 450. Further the operating system/framework 480 is executed on the board controller (conferred to figure 3) The operating system 480 provides the drivers for the hardware interfaces 410, is responsible for the control of basic functionalities like initiation execution sub ware and shut down (init, run, deinit) to provide status control and monitoring and system integration and to provide loop control for all models and hardware.

In figure 4, a system model 485 is executed in a real time engine to simulate those subcomponents and components that are not present as actual real hardware. All signals generated by these system models 485 are also reported to the global data pool 300. Also it is possible for one of the service units, the test unit 600, responsible for automated or manual test runs to influence the behavior of such a simulated component or subcomponent via the global data pool 300 by forcing certain signals or memory locations to take a certain value.

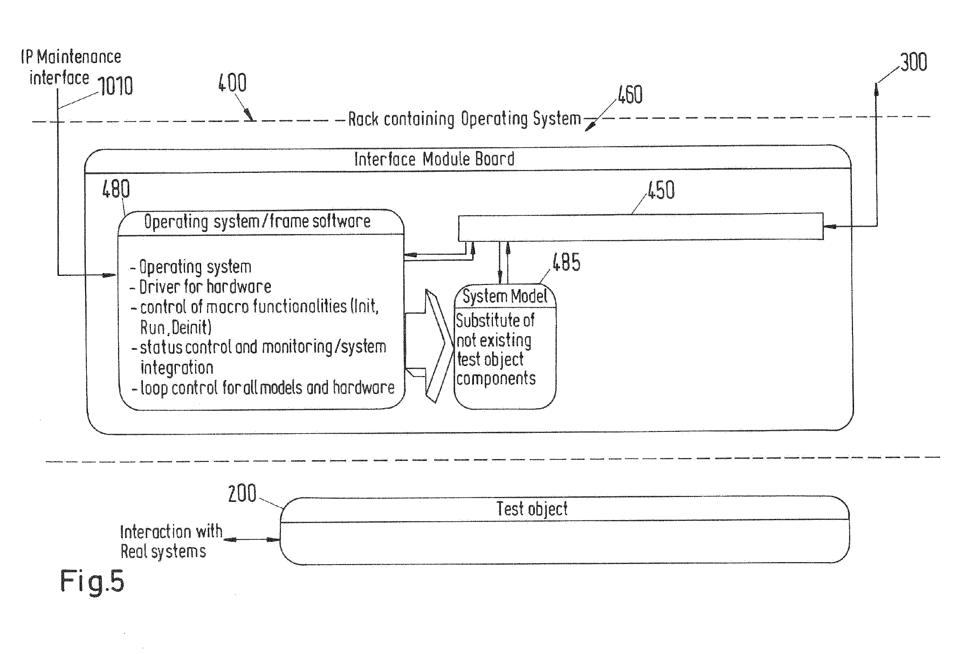

The figure 5 depicts another embodiment of the interface module board 460 which is used just to simulate the components and does not interact with real hardware components. In this embodiment the hardware interfaces are completely missing.

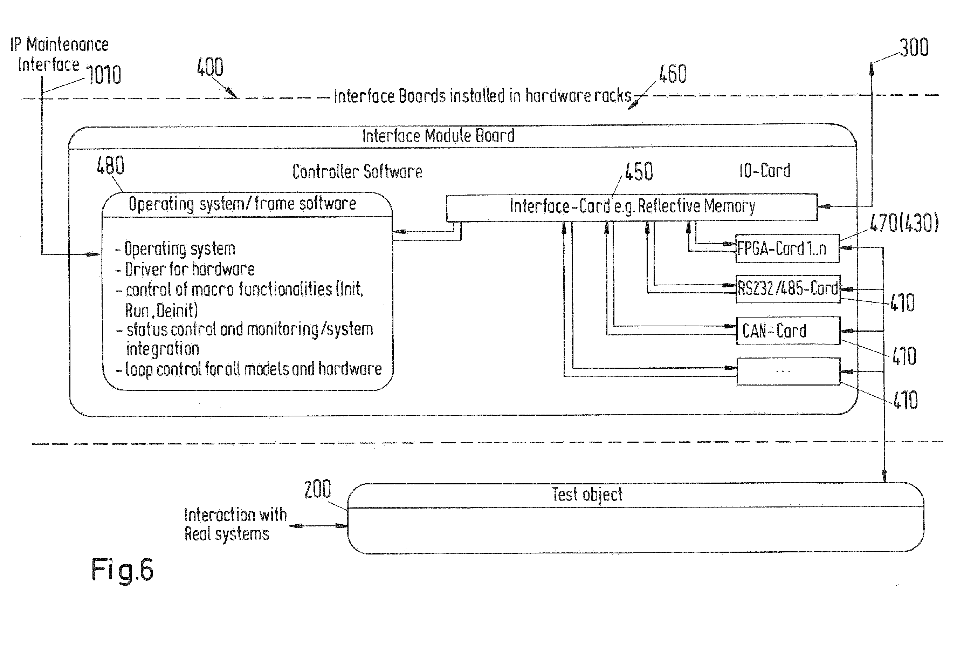

Fig. 6 depicts an embodiment of the interface module board 460 which is just used to interface real hardware and not to simulate any non existing components.

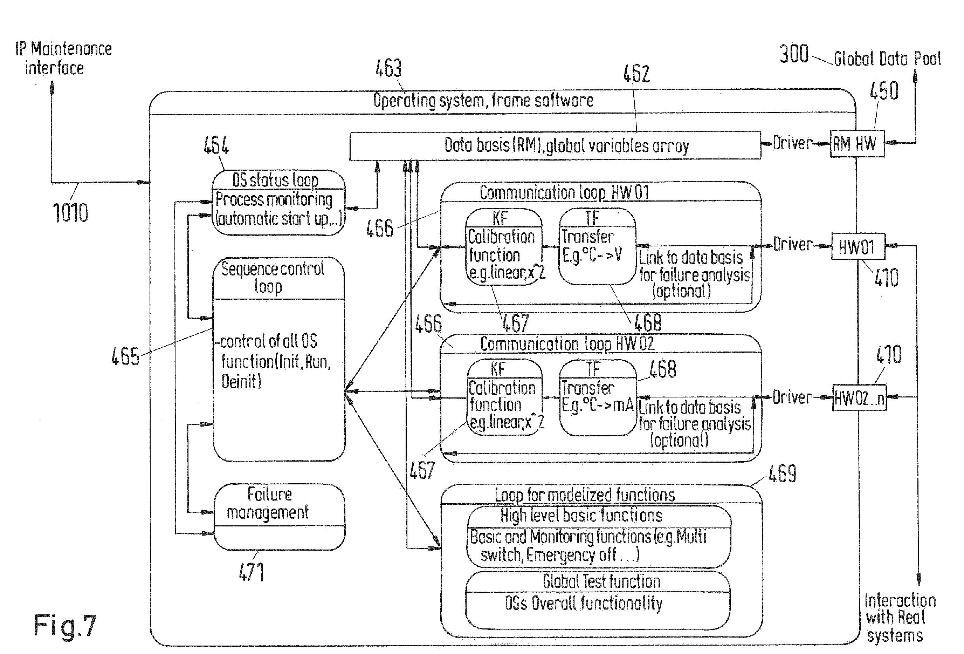

Figure 7 shows a more detailed embodiment of one of the interface module boards focusing mainly on the software engine. In this embodiment the content of the reflective memory table is transferred to local copy of the global data pool 462. A real time operating system 463 comprises an operating status loop 464 controlling the processing of all other software implemented on the system. The real time operating system 463 is responsible for start up of the interface module board, it controls sequence control loop 465 controlling all the operating system functions like init, run and dinit. It is further responsible for controlling the failure management 471.

The real time engine's sequence control loop 465 controls different communication loops 466 related to the different hardware interfaces 410. These communication loops 466 each perform calibration functions 467 and transfer functions 468 for the different signals received or transmitted to the hardware of real components via the hardware interfaces. Further the operating system's sequence control loop 465 controls the loop for modelized functions 469. This loop is responsible for high level basic functions like basic monitoring functions. This loop is also responsible for global test functions. The real time engine's sequence control loop 465 also controls the failure management 471.

All communication loops 466 as well as the loop for modelized functions 469 exchange all signals and parameters via the global data pool embodied in the global data pool interface 450 or the local copy 462 of the global data pool 300. There is no direct signal exchange between the communication loops 466 and/or the loop for modelized functions 469.

All data and signals whether originating from real hard ware or a software model are always reported to the global data pool and are therefore available in real time to each of the modules and components of the test platform, whether realized in hardware and/or in software, any time.

It is important that all signals and state information that is acquired in the instrumentation units is always directly reported to the global data pool even if this signal is only intended to be acted on by the component tested at a certain instrumentation unit. The signal is also reported to the global data pool in order to enable a complete analysis of the test object.

It should be understood that the described embodiment of the test train platform is just one example and can be modified according to the appropriate needs. It is though important that each of the units is equipped with a global data pool interface that is capable to excess the global data pool directly. This way a modular set up of the test platform is possible. This guarantees for a high flexibility, efficient analysis, very good reliability and maintainability of the overall system.

### Reference numerals

- 100: test platform
- 200: test object
- 300: global data pool
- 400: instrumentation unit
- 410: real hardware interface
- 420: system model
- 430: hardware adapters
- 431, 432: break out boxes
- 450: global data pool interface
- 460: interface module board
- 461: board controller
- 462: local copy of global data pool
- 463: real time operating system
- 464: operating status loop
- 465: sequence control loop
- 466: communication loops
- 467: calibration function
- 468: transfer function
- 469: loop for modelized functions
- 470: FPGA-cards (filed programmable gate array cards)
- 471: failure management
- 480: operating system
- 485: system model
- 499: double arrow
- 500: central simulation unit
- 550: global data pool interface
- 600: central user interface unit
- 650: global data pool interface
- 700: central test unit
- 750: global data pool interface
- 800: central data base unit
- 850: global data pool interface
- 900: remote access unit
- 950: global data pool interface
- 960: communication network
- 1000: configuration computer
- 1010: different communication network

## Claims

1. Test platform (100) for testing an integrated test object (200), especially for testing railway trains, comprising:
a global data pool (300) storing a representation of all present signals and states of the integrated test object (200);
at least one instrumentation unit (400), said instrumentation unit (400) comprising:
a global data pool interface (450) for at least providing representations of the signals and states of the at least one component tested at that respective test location for the global data pool (300),
at least one hardware interface (410) for establishing signal communication with the at least one component of the integrated test objects (200) at the at least one instrumentation unit (400) for detecting and/or simulating the signals of the at least one component tested at that respective instrumentation unit,
and a real time engine controlling said global data pool interface (450) and said at least one hardware interface (410);
at least two test platform service units (500-900) for providing control services and/or monitoring services and/or evaluation services, wherein the provided services are each based on data of the global data pool (300),
**characterized in that**
each of the at least two service units (500-900) is equipped with its own global data pool interface (550-950) to enable at least read access to data from the global data pool (300) independently and simultaneously.

2. Test platform (100) according to claim 1, **characterized in that** the at least two service units (500-900) comprise:
one central test unit (700) for performing an automated control and/or manipulation of the use of the integrated test object, and
at least one central user-interface unit (600) for visualization and/or manual control of the states and/or signals of the integrated test object

3. Test platform (100) according to claim 1 or 2, **characterized in that** the global data pool (300) is realized by a reflective memory system in which each global data pool interface (450-950) comprises one local memory table comprising all data of the global data pool (300).

4. Test platform (100) according to any on of the preceding claims, **characterized in that** the at least two test platform service units (500-900) for providing control services and/or monitoring services and/or evaluation services comprise a global data pool database unit (800), said global data pool database unit (800) comprising
a global data pool interface (850) for reading data from the global data pool (300); and
a global data pool database for storing the data contained in the global data pool (300) and together with timing data indicating times of signal changes and/or occurrences to enable historical evaluation.

5. Test platform (100) according to any on of the preceding claims, **characterized in that** the global data pool (300) is configured to grant multiple read access to data of the global data pool (300) at least to several data pool interfaces but to grant write access to each data unit or data area of the global data pool (300) to just one of the data pool interfaces at a time.

6. Test platform (100) according to any on of the preceding claims, **characterized in that** the at least two test platform service units (500-900) for providing control services and/or monitoring services and/or evaluation services comprise a global simulation unit (500) for simulating at least one component of the integrated test object (200), said global simulation unit comprising:
a global data pool interface and
a real time modeling engine.

7. Test platform (100) according to any on of the preceding claims, **characterized in that** the at least two test platform service units (500-900) for providing control services and/or monitoring services and/or evaluation services comprise a remote access server (900) for providing monitoring access to the global data pool (300), said a remote access server comprising:
a global data pool interface,
a server module engine, and
a remote access interface.

8. Test platform (100) according to any on of the preceding claims, **characterized in that** the at least one instrumentation unit (400) comprises signal conditioning equipment for connecting real hardware of the least one component tested at that respective instrumentation unit (400) with the at least one hardware interface (410) of the respective instrumentation unit (400) and conditioning the signals of the real hardware and/or signals of subcomponents of the real hardware and/or generating of sensor signals based on probing the real hardware of the respective component and/or retrieve signals at the real hardware.

9. Test platform (100) according to any on of the preceding claims, **characterized in that** the different service units (500-900) and said global data pool database unit (800) and said global simulation unit (500) and said at least one instrumentation unit (400) comprise a communication network interface each to control and/or configure the respective units remotely.

10. Test platform (100) according to any on of the preceding claims, **characterized in that** the global data pool database unit (800) is configured to receive and store additional information provided by the different service units (500-900) and/or the at least one instrumentation unit (400) of the test platform (100) provided via the communication interfaces of the respective units.

11. Method of testing an integrated test object comprising the steps of providing a test platform (100) according to any of the claims 1 to 10,
wherein at least some real hardware of a component of the integrated test object is installed at at least one instrumentation unit (400) such that at least one signal of the real hardware is provided to the global data pool (300);
controlling the at integrated test object via a one of the service units for providing control services and/or monitoring services and/or evaluation services,
and evaluating and/or manipulating the test object via a different of the service units (500-900) for providing control services and/or monitoring services and/or evaluation services,
**characterized in that**
both service units at least extract data from the global data pool (300) simultaneously and independently of each other via their respective data pool interfaces (550-950).

12. Method according to claim 11, **characterized in that** permission to change a certain data unit or a certain group of data is assigned to one data pool interface (450-950) only at a time.

13. Method according to claim 11 or 12, **characterized in that** changes of said certain data unit or said certain group of data of the global data pool (300) are carried out by one unit only, whose data pool interface (450-950) possesses the current permission to change said respective certain data unit or said respective certain group of data.

14. Method according to any on of the claims 11 to 13, **characterized in that** n the controlling of the test object (200) is performed by a central test unit (700) performing an automated interaction with the test object (2009 via changing data in the global data pool (300).
